# EUROPÄISCHE PATENTSCHRIFT

(11) **EP 1 395 771 B1**
(45) Veröffentlichungstag und Bekanntmachung des Hinweises auf die Patenterteilung: **12.12.2007**
(21) Anmeldenummer: 02745285.3
(22) Anmeldetag: 08.05.2002
(51) Int. Cl.: F16L 37/084

(54) **LÖSBARE STECKKUPPLUNG MIT SCHUTZHÜLSE**
DETACHABLE PLUG-IN CONNECTOR WITH PROTECTIVE SHEATH
RACCORD ENFICHABLE AMOVIBLE PRESENTANT UNE GAINE DE PROTECTION

(30) Priorität: 30.05.2001 DE 10126205
(43) Veröffentlichungstag der Anmeldung: 10.03.2004
(73) Patentinhaber: A. RAYMOND ET CIE, 38000 Grenoble (FR)
(72) Erfinder: MARTIN-COCHER, Daniel, F-38950 Saint Martin le Vinoux (FR); MORETTI, Erminio, F-38000 Grenoble (FR)
(74) Vertreter: Rüttgers, Joachim
(86) Internationale Anmeldenummer: PCT/EP2002/005056
(87) Internationale Veröffentlichungsnummer: WO 2002/097317

(56) Entgegenhaltungen:
- WO-A-01/90629
- DE-C- 19 822 574
- FR-A- 2 780 765

## Beschreibung

Die Erfindung betrifft eine lösbare Steckkupplung mit Schutzhülse zum Verbinden von Flüssigkeitsleitungen. Derartige Steckkupplungen werden beispielsweise im Kraftfahrzeugbau verwendet, um Kraftstoffleitungen untereinander oder mit einem Kraftstoffbehälter oder -verteiler zu verbinden.

Die Steckkupplung besteht hierbei üblicherweise aus einem Kupplungsgehäuse mit einem zylindrischen Aufnahmeraum und einem separaten Halteelement, das mit radial in den Aufnahmeraum gerichteten, elastisch auffederbaren Haltekanten zum Hintergreifen der Halterippe nach dem Eindrücken des Einsteckteils in den Aufnahmeraum versehen ist. Die Haltekanten sind dabei an Stützkörpern angeformt, welche im eingebauten Zustand des Halteelements in entsprechende Aussparungen in der Gehäusewand eintauchen. Die Stützkörper sind wiederum an ihren Enden über V-förmig zusammengeführte Federstege mit Druckplatten verbunden, welche durch entsprechende Öffnungen in der Gehäusewand nach außen ragen und zum Lösen der Kupplung von außen eindrückbar sind. Das Kupplungsgehäuse besitzt darüberhinaus eine über die Druckplatten des Halteelements gegen Federkraft verschiebbaren Schutzhülse.

Eine derartige Steckkupplung mit Schutzhülse ist beispielsweise bekannt aus der EP 0 660 022 B1. Die Schutzhülse ist hierbei als Kappe ausgebildet, die über zwei schraubenförmig gebogene Federstege mit einem Stützring einstückig verbunden ist, welcher am rückwärtigen Ende des Gehäuses in einer radial umlaufenden Rille eingerastet wird. Die Schutzkappe wird durch die Kraft der Federstege über die Gehäusewand soweit vorgeschoben, dass die Druckplatten abgedeckt sind. Dadurch wird ein unbeabsichtigtes Lösen der Kupplung wirkungsvoll verhindert. Will man die Kupplung lösen, so muss die Kappe soweit zurückgeschoben werden, bis die Druckplatten freiliegen und von außen mittels Daumen und Zeigefinger zusammengedrückt werden können. Dadurch werden die Haltekanten auseinander bewegt und die Halterippe des Einsteckteils wird freigegeben, so dass das Einsteckteil herausgezogen werden kann.

Bei dieser Steckkupplung hat es sich als Nachteil erwiesen, dass die einzelnen Teile beim Verpacken aufeinandergedrückt werden, und dass die Schutzkappen mit den Kunststoffedern über eine längere Zeit zusammengedrückt werden können und dadurch bereits vor dem Einsatz ihre Federkraft verlieren. Auch lässt sich für den Monteur nicht ohne weiteres erkennen, ob das Einsteckteil im Kupplungsgehäuse eingerastet ist. Er muss hierfür extra am Einsteckteil ziehen, um sich zu vergewissern, dass die Halterippe auch an den Haltekanten eingerastet sind.

Aufgabe der Erfindung ist es, die eingangs beschriebene Steckkupplung so zu gestalten, dass die durch ungünstige Lagerung sich ergebende Ermüdungsgefahr für die Feder vermieden wird und gleichzeitig durch eine optische Anzeige sichergestellt ist, dass das Einsteckteil korrekt in dem Halteelement eingerastet ist. Diese Aufgabe wird durch die im Anspruch 1 angegebene Ausbildung der Schutzhülse sowie deren Verbindung mit dem Kupplungsgehäuse und Abfederung durch eine Spiralfeder gelöst. Die Schutzhülse befindet sich hierbei vor dem Einführen des Einsteckteils in einer solchen Lage vor dem Kupplungsgehäuse, dass die Druckplatten des Halteelements gut sichtbar sind. Beim Einführen des Einsteckteils wird die Schutzhülse gegen die Federkraft soweit über den Kopf des Kupplungsgehäuses verschoben, bis die Druckplatten vollständig abgedeckt sind. Dies ist gleichzeitig ein optischer Beweis für die korrekte Verbindung.

Durch die mögliche Verwendung einer Spiralfeder aus Metall ist eine lebenslange Verfügbarkeit ohne Ermüdungserscheinungen gewährleistet.

Um die Steckverbindung im Bedarfsfall wieder lösen zu können, sind vom Rand der Schutzhülse aus zwischen zwei Rastnasen Hülsenwandabschnitte von der Breite der Druckplatten eingeschnitten, welche die Druckplatte im eingedrückten Zustand des Einsteckteils überdecken und elastisch gegen die Druckplatten andrückbar sind. Das Andrücken kann durch Querrillen an der Außenwand der Hülsenwandabschnitte noch erleichtert werden.

Damit die Rastnasen beim Aufdrücken der Schutzhülse auf das Kupplungsgehäuse leichter über den vorderen Rand in die rillen eintreten können, sind vom Rand der Schutzhülse aus beiderseits der Rastnasen weitere Wandstreifen eingeschnitten, welche ein elastische Auffedern der Rastnasen beim Aufdrücken der Schutzhülse auf das Kupplungsgehäuse erleichtern.

Die erfindungsgemäße Steckkupplung soll nun anhand eines in der Zeichnung dargestellten Ausführungsbeispiels näher erläutert werde. Es zeigt.
- Fig. 1: Das Kupplungsgehäuse mit eingebautem Halteelement und aufgesteckter Schutzhülse im Längsschnitt,
- Fig. 2: einen um 90° gedrehten Querschnitt durch den Kopf des Kupplungsgehäuses gemäß Linie II - II in Figur 1,
- Fig. 3: die Schutzhülse im Längsschnitt wie in Figur 1,
- Fig. 4: die Schutzhülse im Längsschnitt gemäß Linie IV - IV in Figur 3,
- Fig. 5: die Schutzhülse im Querschnitt gemäß Linie V - V in Figur 4,
- Fig. 6: das Kupplungsgehäuse mit aufgesteckter Schutzhülse im Längsschnitt wie in Figur 1, jedoch um 90° verdreht, beim Einführen des Einsteckteils,
- Fig. 7: die gleiche Darstellung des Kupplungsgehäuses wie in Figur 6 mit voll eingeführtem Einsteckteil,
- Fig. 8: die gleiche Darstellung des Kupplungsgehäuses wie in Figur 6, jedoch in Außenansicht, vor dem Einführen des Einsteckteils und
- Fig. 9: die gleiche Darstellung des Kupplungsgehäuses wie in Figur 8 mit voll eingeführtem Einsteckteil.

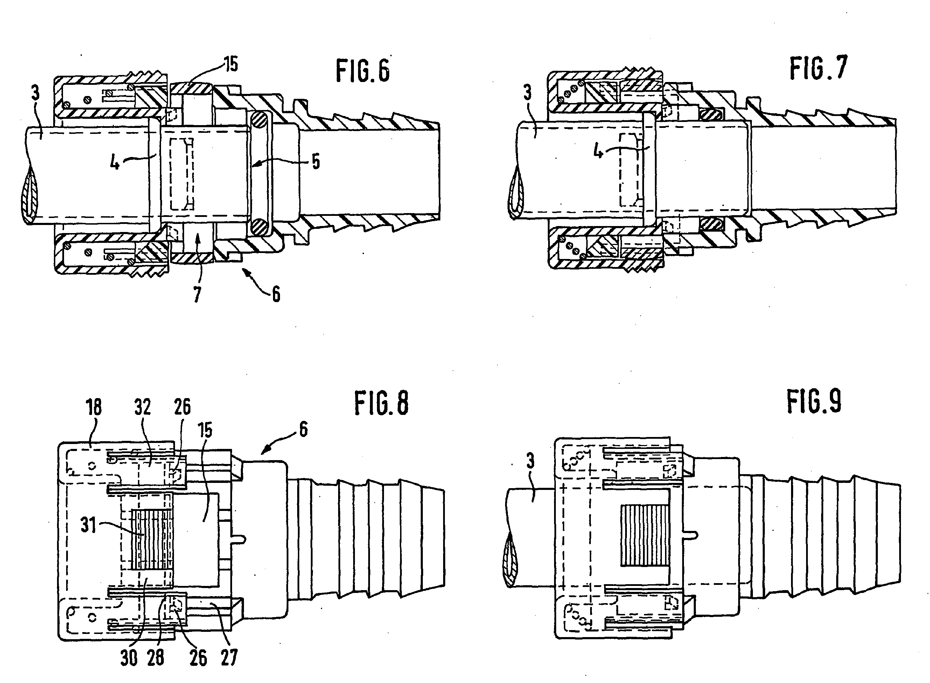

Die in den Figuren dargestellte Steckkupplung besteht im wesentlichen aus einem . Kupplungsgehäuse 1 mit einem zylindrischen Aufnahmeraum 2 zum Einführen eines Einsteckteils 3, das im Abstand vom Mündungsende 5 mit einer umlaufenden Halterippe 4 versehen ist (vgl. Figur 6). Das Kupplungsgehäuse 1 ist im Eingangsbereich mit einem vergrößerten Gehäusekopf 6 ausgebildet, welcher ein separates Halteelement 7 aufnimmt.

Am Ende des Aufnahmeraums 2 besitzt das Kupplungsgehäuse 1 einen sogenannten Anschlußstutzen 8, welcher zum Anschluss einer nicht dargestellten Flüssigkeitsleitung dient. Das Einsteckteil 3 kann an seinem anderen Ende zur Verbindung mit dem Ende einer anderen Flüssigkeitsleitung ebenfalls mit einem ähnlich ausgebildeten Anschlußstutzen versehen sein. Es kann aber auch direkt an einem Kraftstoffbehälter oder -verteiler angeformt sein. Im mittleren, abgesetzten Teil des Aufnahmeraums 2 ist ein Dichtungsring 9 aus Gummi eingebettet und zum Eingangsbereich hin mit einem Stützring 10 abgestützt.

Das Halteelement 7 ist mit radial in den Aufnahmeraum 2 gerichteten, elastisch auffederbaren Haltekanten 11 versehen, welche beim Eindrücken des Einsteckteils 3 in den Aufnahmeraum 2 von der Halterippe 4 auseinandergedrückt werden und nach dem Passieren der Haltekanten 11 wieder in ihre Ausgangslage zurückfedern und dabei zur Verkupplung des Einsteckteils 3 die Halterippe 4 in bekannter Weise hintergreifen.

Die Haltekanten11 sind zu diesem Zweck an zwei nach außen abstehende Stützkörper 12 angeformt, welche ihrerseits im eingebauten Zustand des Halteelements 7 in entsprechende Aussparungen 13 der Gehäusewand 17 eintauchen und dort entgegen der Einsteckrichtung gehalten werden. Die Stützkörper 12 sind an ihren Enden über V-förmig zusammengeführte Federstege 14 untereinander verbunden, wobei die Verbindungsstellen jeweils mit einer rechteckigen Druckplatte 15 abgedeckt sind, welche durch Öffnungen 16 in der Gehäusewand 17 nach außen ragen. Zum Lösen der Kupplung werden die Druckplatten 15 von außen zusammengedrückt. Dabei werden die Haltekanten 11 über die Federstege 14 und die Stützkörper 12 auseinanderbewegt, so dass die Halterippe 4 freigelegt ist und das Einsteckteil 3 aus dem Kupplungsgehäuse 1 herausgezogen werden kann.

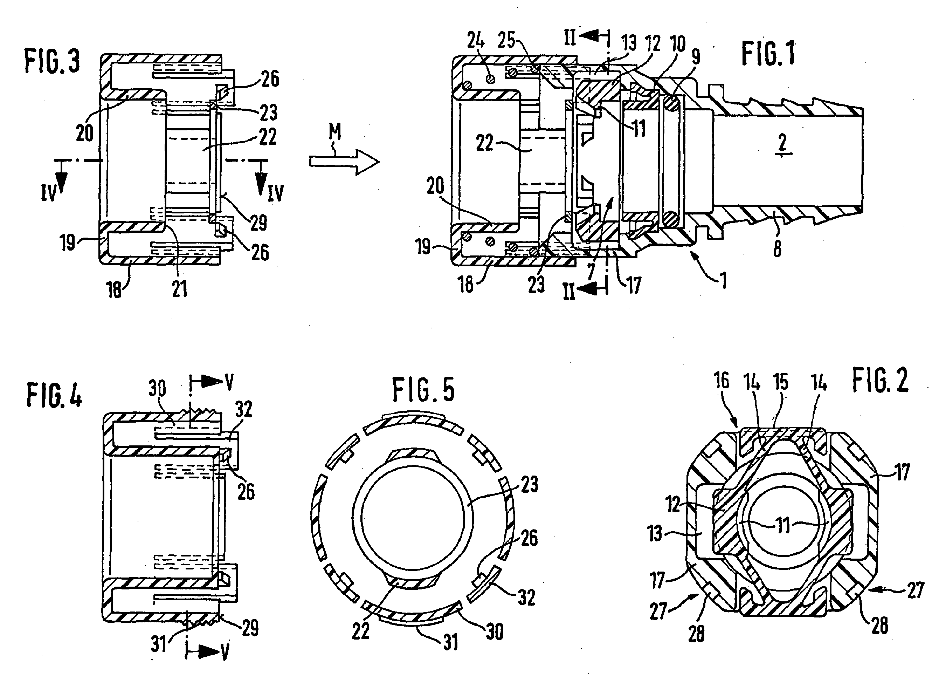

Um ein unbeabsichtigtes Lösen der Kupplung zu vermeiden, ist eine in den Figuren 3 bis 5 dargestellte Schutzhülse 18 vorgesehen, welche am Kopf 6 des Kupplungsgehäuses 1 axial verschiebbar angeordnet ist und zwar derart, dass die Druckplatten 15 beim Eindrücken des Einsteckteils 3 in den Aufnahmeraum 2 von der Schutzhülse 18 abgedeckt werden (vgl. Figur 9).

Diese Schutzhülse 18 ist über einen axialen Abschlussring 19 mit einer inneren Hülse 20 einstückig verbunden, deren Innendurchmesser geringfügig größer ist als der Außendurchmesser der Halterippe 4. Der Innenrand 21 der inneren Hülse 20 ist über zwei Stege 22 mit einem Ring 23 verbunden, dessen Innendurchmesser dem Rohrdurchmesser des Einsteckteils 3 und dessen Außendurchmesser dem Außendurchmesser der Halterippe 4 entsprechen. Der Abschlussring 19 der Schutzhülse 18 ist über eine Spiralfeder 24 aus Metall an der Stirnwand 25 des Gehäusekopfes 6 abgestützt. Außerdem sind an der Innenwand 21 der Schutzhülse 18 paarweise gegenüberliegend nach innen abstehende Rastnasen 26 vorgesehen, welche entgegen der Einsteckrichtung abgeschrägt sind. Diese Rastnasen 26 sind an der Außenwand 17 des Gehäusekopfes 6 in achsparallelen Rillen 27 verschieblich geführt, welche kurz vor der Stirnwand 25 mit einem Anschlag 28 enden (vgl. Fig.8).

Das Zusammenführen von Schutzhülse 18 und Kupplungsgehäuse 1 geschieht in der Weise, dass zunächst die Spiralfeder 24 über die innere Hülse 20 bis zur Anlage am Abschlussring 19 eingelegt wird. Sodann wird die Schutzhülse 18 in Richtung des Pfeiles "M" auf den Gehäusekopf 6 aufgedrückt, bis die Rastnase 26 nach anfänglichem Auffedern in die Rillen 27 einschnappen. Die Spiralfeder 24 ist dann leicht zwischen dem Abschlussring 19 und der Stirnwand 25 des Gehäusekopfes 6 eingespannt, wobei die Schutzhülse 18 durch den Anschlag 28 kurz vor der Stirnwand 25 auf dem Gehäusekopf 6 in betriebsbereiten Zustand festgehalten wird.

Vom Rand 29 der Schutzhülse 18 aus sind zwischen je zwei Rastnasen 26 Wandabschnitte 30 von der Breite der Druckplatten 15 eingeschnitten, welche die Druckplatten 15 im eingedrückten Zustand des Einsteckteils 3 überdecken. Diese Wandabschnitte 30 weisen an der Außenseite Querrillen 31 auf, welche das elastische Andrücken der Wandabschnitte 30 gegen die Druckplatten 15 zum Öffnen des Halteelements 7 erleichtern. Beiderseits der Rastnasen 26 sind weitere Wandstreifen 32 eingeschnitten, welche das elastische Auffedern der Rastnasen 26 beim Aufdrücken der Schutzhülse 18 auf den Gehäusekopf 6 erleichtern. Die Stege 22 zwischen der Innenhülse 20 und dem Ring 23 sind so lang ausgebildet, dass der Ring 23 von der Halterippe 4 soweit in den Aufnahmeraum 2 mitgenommen wird, dass die Wandabschnitte 30 beim Einrasten der Haltekanten 11 die Druckplatten 15 voll überdecken (Figur 9).

### Bezugszeichenliste

- 1: Kupplungsgehäuse
- 2: Aufnahmeraum
- 3: Einsteckteil
- 4: Halterippe
- 5: Mündungsende
- 6: Gehäusekopf
- 7: Halteelement
- 8: Anschlußstutzen
- 9: Dichtungsring
- 10: Stützring
- 11: Haltekanten
- 12: Stützkörper
- 13: Aussparungen
- 14: Federstege
- 15: Druckplatten
- 16: Öffnungen
- 17: Gehäusewand
- 18: Schutzhülse
- 19: Abschlussring
- 20: Innere Hülse
- 21: Innenrand
- 22: Stege
- 23: Ring
- 24: Spiralfeder
- 25: Stirnwand
- 26: Rastnasen
- 27: Rillen
- 28: Anschlag
- 29: Rand
- 30: Wandabschnitte
- 31: Querrillen
- 32: Wandstreifen

## Patentansprüche

1. Lösbare Steckkupplung zum Verbinden von Flüssigkeitsleitungen, bestehend aus einem rohrförmigen Einsteckteil (3) mit einer umlaufenden Halterippe (4), aus einem Kupplungsgehäuse (1) mit einem zylindrischen Aufnahmeraum (2) und einem separaten Halteelement (7), das mit radial in den Aufnahmeraum (2) gerichteten, elastisch auffederbaren Haltekanten (11) zum Hintergreifen der Halterippe (4) nach dem Eindrücken des Einsteckteils (3) in den Aufnahmeraum (2) versehen ist, wobei die Haltekanten (11) an Stützkörpern (12) angeformt sind, welche im eingebauten Zustand des Halteelements (7) in entsprechende Aussparungen (13) in der Gehäusewand (17) eintauchen, und wobei die Stützkörper (12) an ihren Enden über V-förmig zusammengeführte Federstege (14) mit Druckplatten (15) verbunden sind, welche durch entsprechende Öffnungen (16) in der Gehäusewand (17) nach außen ragen und zum Lösen der Kupplung von außen eindrückbar sind, sowie aus einer über die Druckplatten (15) des Halteelements (7) gegen Federkraft verschiebbaren Schutzhülse (18), **dadurch gekennzeichnet, dass** die Schutzhülse (18) über einen radialen Abschlussring (19) mit einer inneren Hülse (20) einstückig verbunden ist, deren Innendurchmesser geringfügig größer ist als der Außendurchmesser der Halterippe (4) und deren Innenrand (21) über zwei Stege (22) mit einem Ring (23) verbunden ist, dessen Innendurchmesser dem Rohrdurchmesser des Einsteckteils (3) und dessen Außendurchmesser dem Außendurchmesser der Halterippe (4) entsprechen, wobei der Abschlussring (19) der Schutzhülse (18) über eine Spiralfeder (24) an der Stirnwand (25) des Gehäusekopfes (6) abgestützt ist und der Innenrand (21) der Schutzhülse (18) paarweise gegenüberliegend nach innen abstehende, entgegen der Einsteckrichtung abgeschrägte Rastnasen (26) aufweist, welche in achsparallelen Rillen (27) an der Außenwand (17) des Gehäusekopfes (6) geführt sind, wobei die Rillen ( 27 ) kurz vor der Stirnwand (25) mit einem Anschlag (28) enden.

2. Lösbare Steckkupplung nach Anspruch 1, **dadurch gekennzeichnet, dass** vom Rand (29) der Schutzhülse (18) aus zwischen je zwei Rastnasen (26) Hülsenwandabschnitte (30) von der Breite der Druckplatten (15) eingeschnitten sind, welche die Druckplatten (15) der Halteelemente (7) im eingedrückten Zustand des Einsteckteils (3) überdecken.

3. Lösbare Steckkupplung nach Anspruch 2, **dadurch gekennzeichnet, dass** die Hülsenwandabschnitte (30) elastisch gegen die Druckplatten (15) andrückbar sind und an der Außenwand Querrillen (31) aufweisen.

4. Lösbare Steckkupplung nach Anspruch 1 oder 2, **dadurch gekennzeichnet, dass** vom Rand (29) der Schutzhülse (18) aus beiderseits der Rastnasen (26) weitere Wandstreifen (32) eingeschnitten sind, welche ein elastisches Auffedern der Rastnasen (26) beim Aufdrücken der Schutzhülse (18) auf den Gehäusekopf (6) ermöglichen.

5. Lösbare Steckkupplung nach Anspruch 2 oder 3, **dadurch gekennzeichnet, dass** die Stege (22) lang genug sind, dass der Ring (23) am Ende der Stege (22) von der Halterippe (4) des Einsteckteils (3) soweit in den Aufnahmeraum (2) mitgenommen wird, dass die Wandabschnitte (30) beim Einrasten der Haltekanten (11) die Druckplatten (15) voll überdecken.

## Claims

1. Detachable plug-in connector for connecting liquid pipes, consisting of a tubular plug-in part (3) having an all-round retaining rib (4) and of a connector housing (1) having a cylindrical receiving space (2) and a separate retaining element (7) which is provided with elastically suspendable retaining edges (11) directed radially into the receiving space (2) for gripping behind the retaining rib (4) after the plug-in part (3) has been pressed into the receiving space (2), the retaining edges (11) being formed on support bodies (12) which dip into corresponding recesses (13) in the housing wall (17) in the installed state of the retaining element (7), and the support bodies (12) being connected at their ends via v-shaped spring webs (14) to pressure plates (15) which project outwards through corresponding openings (16) in the housing wall (17) and can be pressed in from outside for releasing the connector, and of a protective sheath (18) displaceable over the pressure plates (15) of the retaining element (7) against spring force, **characterized in that** the protective sheath (18) is integrally connected via a radial end ring (19) to an inner sheath (20), the internal diameter of which is slightly greater than the external diameter of the retaining rib (4) and the inner edge (21) of which is connected via two webs (22) to a ring (23), the internal diameter of which corresponds to the pipe diameter of the plug-in part (3) and the external diameter of which corresponds to the external diameter of the retaining rib (4), the end ring (19) of the protective sheath (18) being supported via a spiral spring (24) on the end wall (25) of the housing head (6) and the inner edge (21) of the protective sheath (18) having, in pairs, catches (26) which project inwards opposite one another, are bevelled against the plug-in direction and are guided in grooves (27) parallel to the axis in the outer wall (17) of the housing head (6), the grooves (27) ending with a stop (28) shortly before the end wall (25).

2. Detachable plug-in connector according to Claim 1, **characterized in that** sheath wall sections (30) of the width of the pressure plates (15) are cut in from the edge (29) of the protective sheath (18) between two catches (26) in each case, which sheath wall sections cover the pressure plates (15) of the retaining elements (7) when the plug-in part (3) is pressed in.

3. Detachable plug-in connector according to Claim 2, **characterized in that** the sheath wall sections (30) can be pressed elastically against the pressure plates (15) and have transverse grooves (31) in the outer wall.

4. Detachable plug-in connector according to Claim 1 or 2, **characterized in that** further wall strips (32) are cut in from the edge (29) of the protective sheath (18) on both sides of the catches (26), which wall strips permit elastic suspension of the catches (26) when the protective sheath (18) presses onto the housing head (6).

5. Detachable plug-in connector according to Claim 2 or 3, **characterized in that** the webs (22) are sufficiently long to carry on the ring (23) at the end of the webs (22) from the retaining rib (4) of the plug-in part (3) into the receiving space (2) to such an extent that, when the retaining edges (11) snap in, the wall sections (30) completely cover the pressure plates (15).

## Revendications

1. Raccord rapide débrochable destiné à raccorder des conduites véhiculant un liquide, se composant d'un élément embrochable mâle (3) muni d'une nervure de retenue périphérique (4), d'un élément d'accouplement femelle (1) définissant un logement de réception cylindrique (2) et comprenant un organe de retenue séparé (7), qui est muni d'arêtes de retenue capables de céder par déformation élastique (11), orientées dans le plan radial vers le logement de réception (2), destinées à venir cramponner par derrière la nervure de retenue (4) après la poussée de l'élément embrochable mâle (3) en position d'emmanchement dans le logement de réception (2), les arêtes de retenue (11) étant en l'occurrence réalisées solidaires par moulage d'éléments d'appui (12) qui, lorsque l'organe de retenue (7) est inséré en position, viennent s'engager dans des évidements correspondants (13) ménagés dans la paroi (17) de l'élément d'accouplement femelle, et les éléments d'appui (12) étant en l'occurrence reliés, au niveau de leurs extrémités, par l'intermédiaire de barrettes entretoises élastiques (14), à des plaquettes de compression (15), qui font saillie vers l'extérieur au travers d'ouvertures (16) prévues en correspondance dans la paroi (17) de l'élément d'accouplement femelle et qui, lorsqu'une pression est exercée sur celles-ci depuis l'extérieur, permettent de désolidariser le raccord, ainsi que d'un manchon de protection (18) qui, sous l'action des plaquettes de compression (15) de l'organe de retenue (7) peut être déplacés en translation en contrant pour ce faire la force antagoniste exercée par un ressort, **caractérisé en ce que** le manchon de protection (18) est réalisé solidaire, selon une disposition monobloc, par l'intermédiaire d'une bague de fermeture (19), d'une douille intérieure (20) dont le diamètre intérieur est très légèrement supérieur au diamètre extérieur de la nervure de retenue (4) et dont le bord intérieur (21) est raccordé à une bague (23) par l'intermédiaire de deux barrettes entretoises (22), dont le diamètre intérieur correspond au diamètre tubulaire de l'élément embrochable mâle (3) et le diamètre extérieur au diamètre extérieur de la nervure de retenue (4), la bague de fermeture (19) du manchon de protection (18) prenant en l'occurrence appui, par l'intermédiaire d'un ressort hélicoïdal (24), sur la paroi antérieure (25) de la tête (6) de l'élément d'accouplement femelle et comporte des ergots d'accrochage (26), inclinés dans le sens contraire de celui de l'emmanchement, faisant saillie vers l'intérieur, disposés par paire à l'opposé du bord intérieur (21) du manchon de protection (18), qui sont insérés dans des rainures coaxiales (27) de la paroi extérieure (17) de la tête (6) de l'élément d'accouplement femelle, les rainure (27) se terminant par une butée (28) légèrement en avant de la paroi antérieure (25).

2. Raccord rapide débrochable selon la revendication 1, **caractérisé en ce qu'**il est ménagé, en partant du bord (29) du manchon de protection (18), entre respectivement deux ergots d'accrochage (26), des portions de paroi de manchon (30) ayant la même largeur que les plaquettes de compression (15) qui, lorsque l'élément embrochable mâle (3) est poussé en position d'emmanchement, viennent recouvrir les plaquettes de compression (15) des organes de retenue (7).

3. Raccord rapide débrochable selon la revendication 2, **caractérisé en ce que** les portions de paroi de manchon (30) peuvent être appliquées sous pression, par effet de cédage élastique, contre les plaquettes de compression (15) et **en ce qu'**elles comportent des rainures transversales (31) au niveau de leur paroi extérieure.

4. Raccord rapide débrochable selon les revendications 1 ou 2, **caractérisé en ce que** sont ménagées, partant du bord (29) du manchon de protection (18), de part et d'autre des ergots d'accrochage (26), d'autres bandes de paroi (32), qui permettent aux ergots d'accrochage (26) de céder par déformation élastique lors de l'application par pression du manchon de protection (18) sur la tête (6) de l'élément d'accouplement femelle.

5. Raccord rapide débrochable selon les revendications 2 ou 3, **caractérisé en ce que** les barrettes entretoises (22) sont suffisamment longues pour faire en sorte que la bague (23), à l'extrémité des barrettes entretoises (22), soit entraînée au passage par la nervure de retenue (4) de l'élément embrochable mâle (3), dans le logement de réception (2) dans une proportion suffisamment importante pour que les portions de paroi (30) viennent recouvrir complètement les plaquettes de compression (15) lors de l'engagement des arêtes de retenue (11) en prise d'encastrement.
